# FASCICULE DE BREVET EUROPEEN

(11) **EP 0 799 104 B1**
(45) Date de publication et mention de la délivrance du brevet: **13.09.2000**
(21) Numéro de dépôt: 95942234.6
(22) Date de dépôt: 08.12.1995
(51) Int. Cl.: B23B 5/18

(54) **MACHINE-OUTIL POUR L'USINAGE DE VILEBREQUINS POUR DES MOTEURS A QUATRE CYLINDRES EN LIGNE, SON PROCEDE DE TRAVAIL ET CHAINE D'USINAGE INTEGRANT UNE TELLE MACHINE-OUTIL**
WERKZEUGMASCHINE ZUM BEARBEITEN VON KURBEWELLEN FÜR VIERZYLINDER IN-LINE MOTOREN, METHODE ZUM VERWENDEN DESSEN, UND MASCHINLINIE IN DENEN DIESE MASCHINE VERWENDET WIRD
MACHINE TOOL FOR MACHINING CRANKSHAFTS FOR ENGINES WITH FOUR IN-LINE CYLINDERS, METHOD FOR OPERATING SAME, AND MACHINING LINE COMPRISING SAID MACHINE TOOL

(30) Priorité: 09.12.1994 FR 9414826
(43) Date de publication de la demande: 08.10.1997
(73) Titulaire: Renault Automation Comau, 92365 Meudon La Forêt Cedex (FR)
(72) Inventeur: ASSIE, Jean-Paul, F-81100 Castres (FR)
(74) Mandataire: Richebourg, Michel François
(86) Numéro de dépôt international: FR9501633
(87) Numéro de publication internationale: WO9617705

(56) Documents cités:
- EP-A- 0 318 966
- EP-A- 0 417 446
- GB-A- 832 757
- GB-A- 832 758
- GB-A- 832 759
- GB-A- 1 265 609
- US-A- 2 643 570
- US-A- 4 305 232

## Description

La présente invention a trait au domaine de l'usinage de vilebrequins selon le préambule de la revendication 1 et comme connu du document US-A-4.305.232, et concerne plus particulièrement une machine-outil pour le tournage-arasage de vilebrequins pour des moteurs à quatre cylindres en ligne.

Les machines-outils assurant actuellement le tournage-arasage de vilebrequins destinés à des moteurs à quatre cylindres en ligne sont du type de celles comprenant un bâti sur lequel sont agencés une station de travail assurant la mise en rotation d'un vilebrequin et un poste d'usinage équipé d'au moins un disque porte-outils assurant le tournage-arasage du vilebrequin entraîné en rotation sur la station de travail. Généralement, le poste d'usinage et la station d'entraînement sont disposés dans un plan incliné de manière à faciliter l'extraction des copeaux résultant de l'opération d'usinage.

Une telle machine-outil présente un inconvénient sur le plan de la rentabilité car une temporisation est nécessaire entre deux opérations d'usinage sur une même machine pour assumer toutes les opérations de débridage, de déchargement, de chargement, de bridage et d'indexage d'un vilebrequin, appelées "opérations auxiliaires" dans le contexte de la présente invention. Pour le tournage-arasage de vilebrequins destinés à des moteurs à quatre cylindres en ligne, la demanderesse a constaté que les temps des opérations auxiliaires étaient aussi longs que les temps d'usinage de telle sorte que les temps effectifs d'usinage sont réduits de moitié, ce qui nuit fortement au rendement effectif de telles machines-outils.

Une première solution à ce problème de rendement effectif d'une chaîne d'usinage de vilebrequins est décrite dans le texte du brevet américain n°4,305,232 pour une machine rectifieuse.
Selon l'invention décrite dans ce texte, le dispositif rectifieur comporte un premier module de levage et de transport des vilebrequins non rectifiés qui, prenant les vilebrequins tous orientés de la même façon, les fait passer d'une première machine rectifieuse assurant, par exemple, la rectification du palier externe droit, à une deuxième machine assurant par exemple, la rectification du palier interne gauche.
Une fois un palier interne et un palier externe rectifié, le vilebrequin est amené enfin de ligne puis repris par un deuxième module de levage et de transport le ramenant en début de ligne. Avant d'être repris par ledit premier module de levage et de transport, le vilebrequin partiellement rectifié est retourné à 180 ° de façon à ce que son plateau se retrouve au niveau de la queue et sa queue au niveau du plateau. Ce retournement a pour avantage d'exploiter la symétrie de disposition des paliers internes et externes d'un vilebrequin de façon à ce que les deux machines rectifieuses puissent assurer la rectification des deux paliers un externe et l'autre interne non encore rectifiés.
La solution au problème de rendement concerne ici la spécialisation de deux machines de rectification comportant chacune au moins un outil et un moyen de réception et d'entraînement du vilebrequin et qui ne rectifient qu'un palier à la fois formant une chaîne d'usinage sur laquelle un vilebrequin se déplace une première fois puis est retourné et se déplace une deuxième fois sur les deux machines de rectification.
Néanmoins, elle ne concerne pas l'optimisation des temps de chargement et de déchargement d'une machine-outil sur une même machine-outil

Partant de ces constatations, la demanderesse a donc mené des recherches qui ont abouti à l'étude d'une nouvelle conception de machine-outil permettant d'obvier à ce type d'inconvénient tout en offrant de nombreux autres avantages destinés à améliorer l'usinage des vilebrequins tant sur le plan quantitatif que sur le plan qualitatif. Bien qu'une telle machine-outil ait été conçue dans l'esprit de leurs novateurs afin de réaliser les opérations de tournage-arasage de vilebrequins pour des moteurs à quatre cylindres en ligne, il va de soi que ses concepts fondamentaux qui vont être ci-après décrits et représentés pour ce type précis d'application, pourront être facilement adoptés par l'homme de métier pour d'autres types d'usinage (rectification, tournage simple, ...) et d'autres types de vilebrequins.

La machine-outil suivant l'invention affectée à l'usinage de vilebrequins est du type de celle comprenant agencés sur un bâti le long de l'axe de transfert d'une chaîne d'usinage et dans un même plan horizontal :
- un poste d'usinage équipé d'au moins un disque porte-outils assurant l'usinage des vilebrequins,
- et deux stations de travail, assurant l'entraînement en rotation de deux vilebrequins, est remarquable en ce que les deux stations de travail sont disposées parallèlement en amont et en aval du poste d'usinage, de telle sorte que le disque porte-outils de ce dernier monté mobile le long de l'axe de transfert puisse évoluer selon un mouvement de va-et-vient d'une station de travail à l'autre et assurer l'usinage d'un vilebrequin sur une station de travail pendant les opérations auxiliaires nécessaires à l'installation d'un nouveau vilebrequin sur l'autre station de travail, et vice-versa.

La disposition coplanaire des deux stations de travail de part et d'autre d'un poste d'usinage, conjuguée avec la mobilité de ce dernier entre les deux stations de travail, autorise ainsi, pendant les temps auxiliaires nécessaires aux opérations de débridage, de déchargement, de chargement, de bridage et d'indexage d'un vilebrequin sur une station de travail, les opérations d'usinage d'un vilebrequin sur l'autre station de travail par le disque porte-outils du même poste d'usinage. De ce fait, le rapport quantitatif est multiplié par deux et l'encombrement occupé par l'ensemble de la machine-outil est moindre que celui occupé par deux machines-outils, avantage non négligeable compte tenu du coût du mètre carré occupé en zone industrielle.

Bien que le brevet américain n° 4,305,232 divulgue la présence d'un poste d'usinage et de deux stations de travail, chaque station de travail est associée à un outil ou un poste d'usinage, contrairement à la caractéristique principale de l'invention dont le poste d'usinage de l'invention est montée mobile selon l'axe de transfert entre les deux stations de travail de façon à pouvoir atteindre et usiner les vilebrequins présents dans les deux stations de travail.

Selon une première forme de réalisation préférée de l'invention, le poste d'usinage est équipé de deux disques porte-outils mobiles le long de l'axe de transfert d'une part, pour évoluer d'une station de travail à l'autre, et le long d'un axe perpendiculaire au premier d'autre part, pour se rapprocher et/ou s'éloigner l'un de l'autre afin d'assurer l'usinage de deux portions différentes du vilebrequin d'une station de travail à l'autre. Une telle cinématique a pour objet de mettre en oeuvre un procédé de travail original qui consiste à usiner sur une station de travail d'une machine-outil les manetons ou les paliers extrêmes d'un vilebrequin et sur l'autre station de travail les manetons ou les paliers intermédiaires d'un autre vilebrequin. De préférence, le procédé consiste à usiner sur la première station de travail les paliers ou manetons extrêmes et sur la deuxième station de travail les manetons ou paliers intermédiaires de telle sorte que le maintien des vilebrequins par les poupées de la deuxième station de travail puisse être assuré au plus près des manetons ou paliers intermédiaires à usiner. Le fait de pouvoir rapprocher au plus près des zones d'usinage le maintien des vilebrequins sur la deuxième station de travail, et généralement sur une zone ayant déjà été usinée sur une autre station de travail, assure une très bonne tenue isostatique du vilebrequin tout en évitant l'emploi de lunettes de guidage comme dans les machines-outils de conception antérieure.

Selon une deuxième forme de réalisation préférée de l'invention, le poste d'usinage est équipé d'un disque porte-outils mobile le long de l'axe de transfert d'une part, pour évoluer d'une station de travail à l'autre, et le long d'un axe perpendiculaire au premier d'autre part, pour se déplacer d'une extrémité à l'autre du vilebrequin afin d'assurer l'usinage des extrémités de ce dernier d'une station de travail à l'autre. Cette cinématique a pour objet de mettre en oeuvre un procédé de travail original qui consiste à usiner sur une station de travail d'une machine-outil une des extrémités d'un vilebrequin, à savoir le plateau et sur l'autre station de travail l'autre extrémités, à savoir la queue d'un autre vilebrequin. Comme dans la première forme de réalisation et à des fins de meilleure tenue par les poupées de soutien et d'entraînement du vilebrequin dans les stations de travail, le procédé consiste à usiner en priorité sur la première station de travail le plateau et sur la deuxième station de travail la queue des vilebrequins.

Selon un mode de réalisation préférée de l'invention, le portique surmontant la machine-outil et qui assure le transfert des vilebrequins d'une station de travail à l'autre comporte un chariot monté coulissant et disposant avantageusement de deux pinces de préhension des vilebrequins ayant un pas égal au pas des deux stations de travail de la machine-outil de manière à pouvoir assurer les opérations de manutention des vilebrequins deux par deux en intervenant simultanément sur les deux stations de travail ou sur une station et un poste de travail (convoyeur d'arrivée ou de sortie par exemple) situé en amont ou en aval de la machine-outil. Le chariot de ce portique peut comporter également un magasin porte-outils qui, disposé entre les deux pinces de préhension, assure la dépose et/ou la pose par le haut des outils du poste d'usinage, lequel est devenu moins accessible latéralement en raison de l'enclavement de ce dernier par les deux stations de travail.

L'invention concerne également une chaîne d'usinage de vilebrequins pour moteurs quatre cylindres comportant au moins trois machines-outils destinées l'une à l'usinage des manetons, l'autre à l'usinage des paliers et la dernière à l'usinage des extrémités (plateau et queue), lesquelles sont disposées au-dessous d'un portique assurant le guidage de chariots de transfert des vilebrequins et de changement d'outils.

Bien que les aspects principaux de l'invention considérés comme nouveaux aient été exprimés ci-dessus dans leur forme la plus élémentaire, de plus amples détails concernant un mode de réalisation préférée d'une chaîne d'usinage intégrant des machines-outils respectant les concepts fondamentaux de l'invention, seront mieux compris en se référant à la description ci-après et aux dessins l'accompagnant illustrant ces modes de réalisation.

Sur ces dessins :

La figure 1 est une vue de profil d'une chaîne d'usinage intégrant une machine-outil selon l'invention, pour le tournage-arasage d'un vilebrequin pour des moteurs à quatre cylindres en ligne.

La figure 2 est une vue de dessus schématique de la machine-outil illustrée sur le dessin de la figure 1.

La figure 3 est une vue schématique illustrant le fonctionnement d'une machine-outil selon un premier mode de fonctionnement destiné à assurer l'usinage des paliers d'un vilebrequin.

La figure 4 est une vue schématique illustrant le fonctionnement d'une machine-outil selon un deuxième mode de fonctionnement destiné à assurer l'usinage des manetons d'un vilebrequin.

La figure 5 est une vue de profil d'une chaîne d'usinage intégrant deux machines-outils utilisant l'une le premier mode de fonctionnement pour l'usinage des paliers d'un vilebrequin et l'autre le deuxième mode de fonctionnement pour l'usinage des manetons.

La figure 6 est une vue de dessus schématique de la machine-outil illustrée à la figure 1, selon un troisième mode de fonctionnement destiné à assurer l'usinage des extrémités d'un vilebrequin.

La figure 7 est une vue schématique illustrant le fonctionnement de la machine-outil de la figure 6.

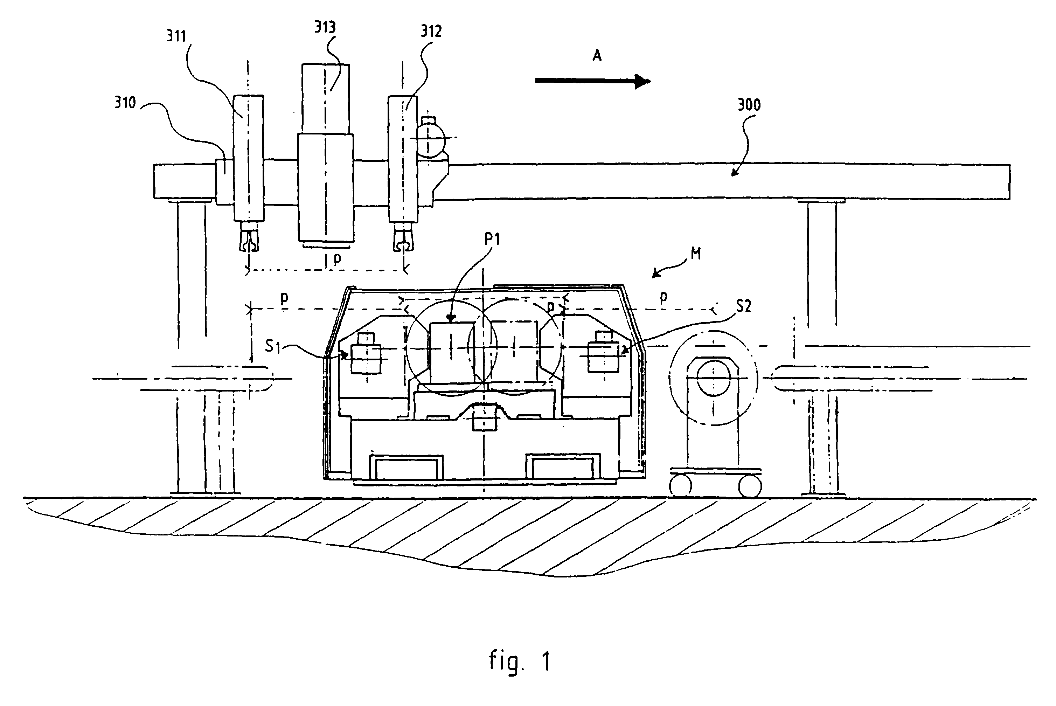

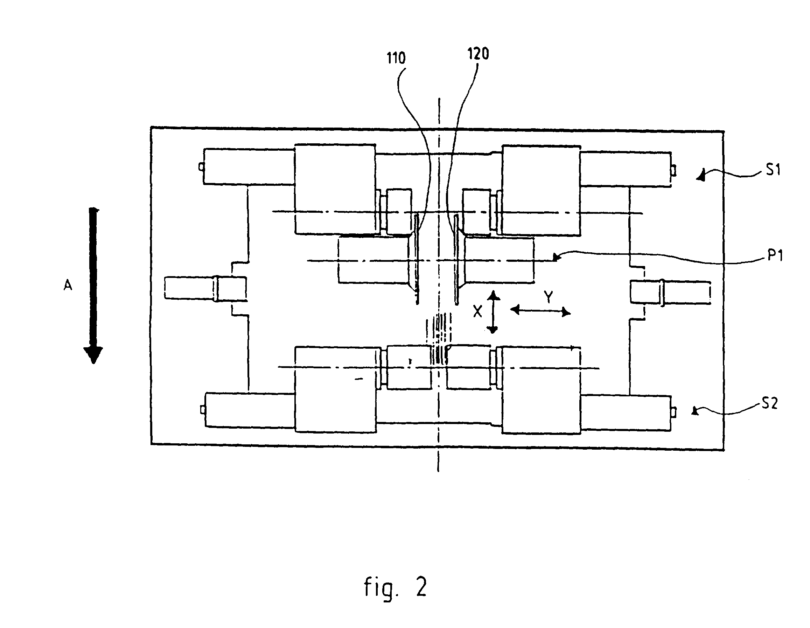

La machine-outil de l'invention, référencée M dans son ensemble et représentée sur les dessins des figures 1 et 2, est affectée dans le cas présent à l'usinage par tournage-arasage de vilebrequins pour des moteurs à quatre cylindres en ligne.

Une telle machine est constituée d'un bâti réalisé classiquement en mécano soudé et à partir de longerons judicieusement assemblés entre eux afin de servir de structure logique aux différents organes nécessaires au fonctionnement de la machine et qui vont être ci-dessus décrits. Ce bâti peut également inclure dans sa configuration, un dispositif d'évacuation des copeaux résultant de l'usinage à des fins de récupération soit vers un caniveau aménagé dans le sol soit vers des convoyeurs installés sous les postes de travail.

Selon les dispositions principales de l'invention, le bâti est aménagé pour recevoir le long de l'axe de transfert (symbolisé par la flèche A) et dans un même plan horizontal :
- un poste d'usinage P1,
- et deux stations de travail S1 et S2 qui, assurant l'entraînement en rotation de deux vilebrequins (non représentés sur ces dessins pour une meilleure clarté), sont disposées parallèlement de part et d'autre du poste d'usinage P1.

Tel qu'illustré sur le dessins des figures 2, 3 et 4, le poste d'usinage P1 est équipé de deux disques porte-outils 110 et 120 assurant l'usinage par tournage-arasage des deux vilebrequins et est monté mobile (flèche X) le long de l'axe de transfert (flèche A) de manière à pouvoir évoluer selon un mouvement de va-et-vient de la première station de travail S1 à la deuxième station de travail S2, avec pour objectif d'assurer l'usinage d'un vilebrequin pendant les opérations auxiliaires nécessaires à l'installation d'un nouveau vilebrequin sur l'autre station de travail, et vice-versa.

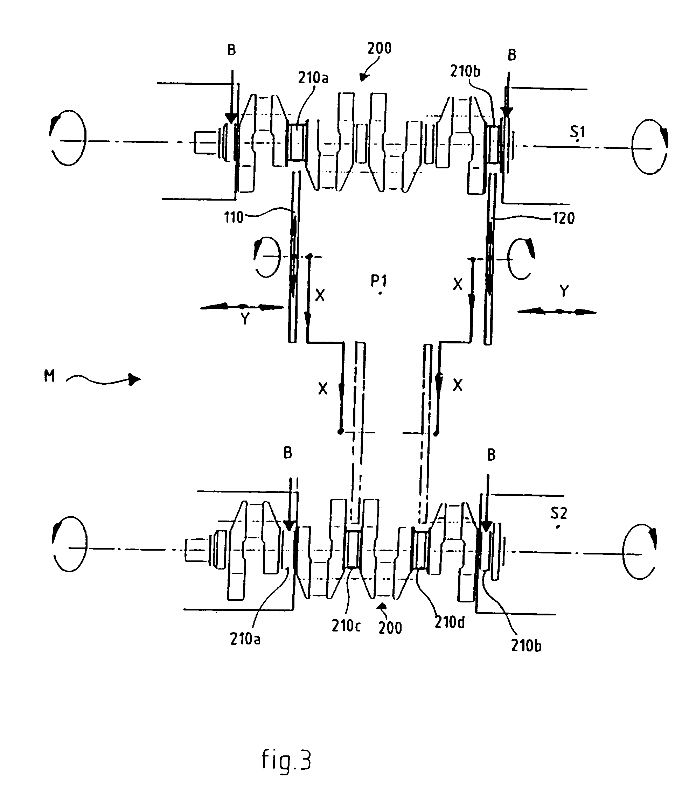

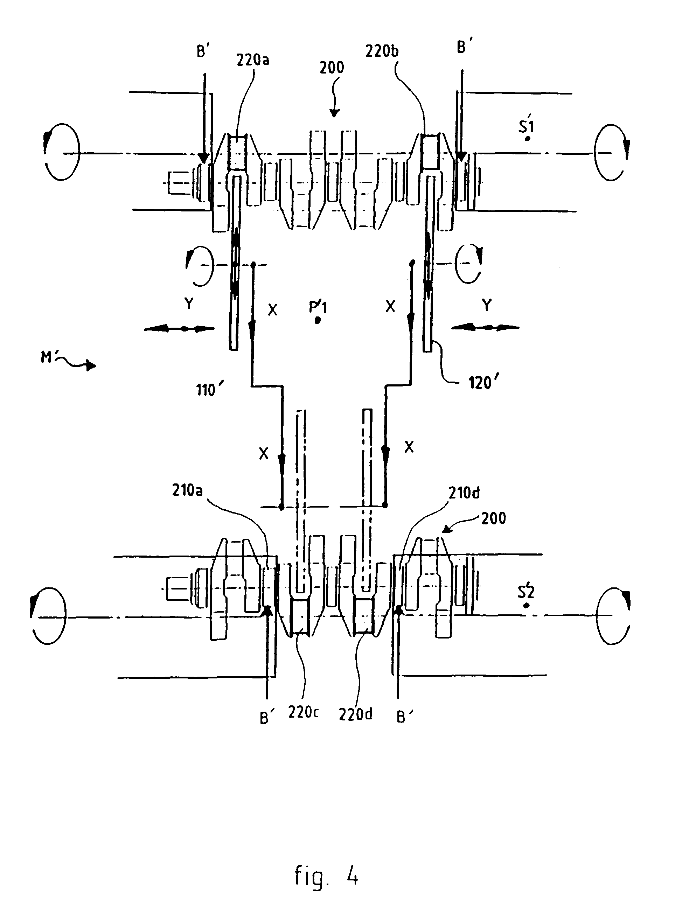

D'autre part, les deux disques porte-outils 110 et 120 du susdit poste d'usinage P1 montés mobiles le long de l'axe de transfert pour évoluer d'une station de travail, S1 ou S2, à l'autre, S2 ou S1, sont également animés d'un mouvement de translation (flèche Y) le long d'un axe perpendiculaire à l'axe de transfert (flèche A) pour se rapprocher et/ou s'éloigner l'un de l'autre à des fins d'usinage de deux portions différentes du vilebrequin d'une station de travail S1 ou S2 à l'autre. Comme précisé au début du présent mémoire, cette double mobilité X et Y des disques porte-outils 110 et 120 entre les deux stations de travail S1 et S2 permet d'assumer la mise en oeuvre d'un procédé de travail original, lequel est illustré plus en détails sur les dessins des figures 3 et 4.

Le dessin de la figure 3 a pour objet d'illustrer par un schéma synoptique, la cinématique du poste d'usinage P1 et des deux stations de travail S1 et S2 d'une machine M assurant l'usinage par tournage-arasage des paliers 210a, 210b, 210c 210d d'un vilebrequin 200. Comme on peut le voir sur ce dessin, les deux disques porte-outils 110 et 120 représentés en traits pleins usinent par tournage-arasage les paliers extrêmes 210a et 210 b du vilebrequin 200 maintenu à ses extrémités dans les poupées de la station de travail S1 non représentées mais dont les points de bridage sont symbolisés par les flèches B. Ensuite, lorsque cet usinage est terminé, le poste d'usinage P1 se déplace (flèches X) vers la station de travail opposée S2 tout en rapprochant l'un de l'autre (flèches Y) les deux disques porte-outils 110 et 120, tels que représentés en traits mixtes sur le dessin. Le vilebrequin 200 installé dans la station de travail S2 est alors usiné par tournage-arasage au niveau de ses paliers centraux 210c et 210d avec un maintien du vilebrequin dans les poupées de la station de travail S2 au plus près des zones d'usinage par l'autorisation d'un bridage sur les paliers extrêmes 210a et 210b précédemment usinés sur le poste S1.

Le dessin de la figure 4 a pour objet d'illustrer par un schéma synoptique, la cinématique du poste d'usinage P' 1 et des deux stations de travail S' 1 et S'2 d'une machine M' assurant l'usinage par tournage-arasage des manetons 220a, 220b, 220c, 220d du vilebrequin 200. Comme on peut le voir sur ce dessin, les deux disques porte-outils 110' et 120' représentés en traits pleins usinent par tournage-arasage les manetons extrêmes 220a et 220 b du vilebrequin 200 maintenu à ses extrémités dans les poupées de la station de travail S'1, non représentées mais dont les points de bridage sont symbolisés par les flèches B'. Ensuite, lorsque cet usinage est terminé, le poste d'usinage P' 1 se déplace (flèches X) vers la station de travail opposée S'2 tout en rapprochant (flèche Y) l'un de l'autre, les deux disques porte-outils 110' et 120', tels que représentés en traits mixtes sur le dessin. Le vilebrequin 200 installé dans la station de travail S'2 est alors usiné par tournage-arasage au niveau de ses manetons centraux 220c et 220d avec un maintien du vilebrequin dans les poupées de la station de travail S'2 au plus près des zones d'usinage par l'autorisation d'un bridage (flèches B') sur les paliers 210a et 210d précédemment usinés sur la machine M.

Il est utile de préciser que le vilebrequin 200 représenté sur les dessins des figures 3 et 4 a été considéré comme le même en un instant donné pour mieux mettre en évidence les cycles d'usinage. En fait, comme cela est décrit un peu plus loin, les cycles de manutention des vilebrequins seront adaptés de telle manière que chaque vilebrequin 200 soit usiné dans l'ensemble des stations S1, S2, S'1 et S'2.

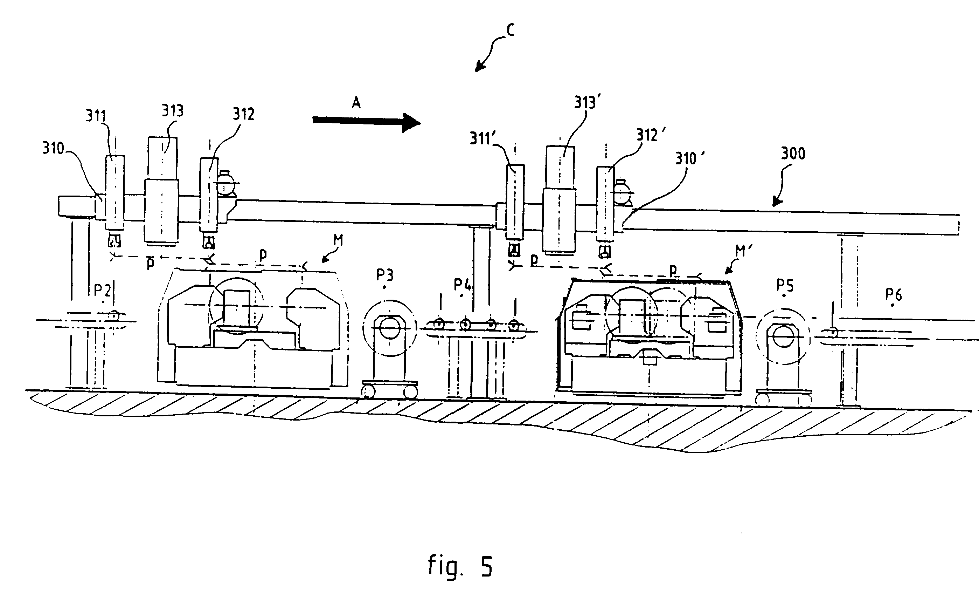

Ce procédé de travail trouve un plus grand intérêt lorsqu'une chaîne d'usinage C telle qu'illustrée sur le dessin de la figure 5 intègre en série dans le sens du transfert (flèche A), les deux machines-outils M et M' aptes à usiner la première les quatre paliers 210a, 210b, 210c, 210d du vilebrequin 200 et l'autre les quatre manetons 220a, 220b, 220c, 220d. Selon le type de chaîne d'usinage C dans laquelle les machines-outils de l'invention sont incluses, d'autres postes de convoyage ou de stock tampon P2, P3, P4, P5, P6 peuvent être aménagés en amont ou en aval des deux machines-outils M et M', démonstration que ces dernières peuvent facilement s'insérer dans une chaîne déjà existante.

En se rapportant à nouveau au dessin de la figure 1, on notera que la machine M est surmontée d'un portique 300 qui assure, via un chariot mobile 310, le transfert des vilebrequins 200 d'une station de travail S1 ou S2 à l'autre station de travail S2 ou S1. A cet effet, le chariot 310 de ce portique 300 est aménagé de deux pinces 311 et 312 de préhension des vilebrequins 200, présentant un pas "p" égal au pas "p" des deux stations de travail S1 et S2 de la machine-outil M, de manière à pouvoir mettre en oeuvre un cycle de manutention en duplex entre les deux stations de travail S1 et S2 d'une part, et avec une station de travail S1 et S2 et un poste de travail externe P2, P3, P4, P5, P6 (convoyeur ou stock tampon) situé en amont ou en aval d'autre part. En mettant en adéquation ce cycle de manutention en duplex des pinces de préhension 311 et 312 du chariot 310 du portique 300 avec les cycles de fonctionnement du poste d'usinage P1 et des stations de travail S1 et S2 de la machine M, il est alors possible d'usiner un vilebrequin 200 sur les deux stations de travail S1 et S2, sans pratiquement de temps mort des disques porte-outils 110 et 120 à l'exception des temps de translation (flèches X et Y) du poste d'usinage P1 d'une station de travail à l'autre. En effet, les temps d'usinage du poste d'usinage P1 sur une station de travail sont dûment employés pour exécuter les opérations auxiliaires de débridage, de déchargement, de chargement, de bridage et d'indexage d'un vilebrequin sur l'autre station de travail.

Le chariot 310 de ce portique 300 comporte également un magasin porte-outils 313 qui, disposé entre les deux pinces de préhension 311 et 312, a pour objet d'assurer la dépose et/ou la pose par le haut des outils sur le poste d'usinage P1.

En se rapportant au dessin de la figure 5 représentant la chaîne d'usinage C avec les deux machines-outils M et M', on notera que le portique 300 comporte deux chariots 310 et 310', offrant chacun le même équipement de deux pinces de préhension 311, 311', 312, 312' et d'un magasin porte-outils 313, 313', pour assurer chacun le cycle de manutention des vilebrequins 200 entre les deux machines-outils M et M'. Le pas "p" entre les organes des deux machines-outils sera identique.

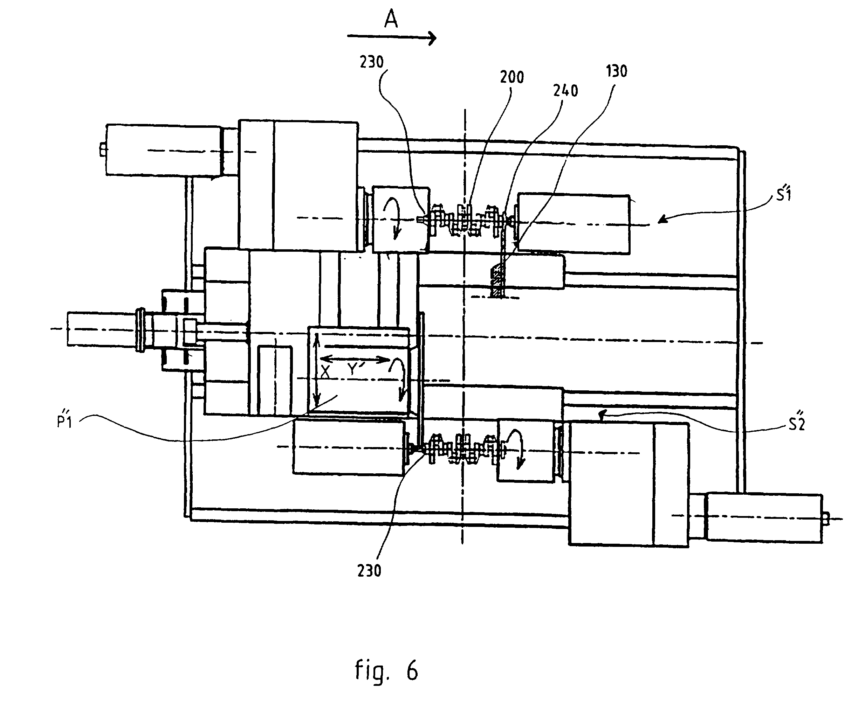

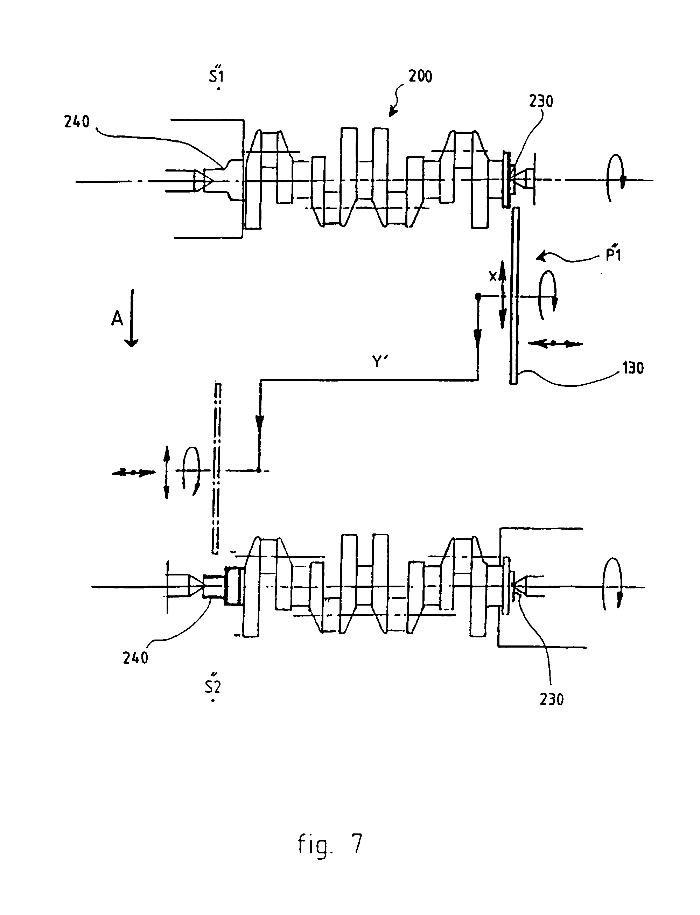

Tel qu'illustré sur les dessins des figures 6 et 7, le poste d'usinage P"1 est équipé d'un seul disque porte-outils 130 assurant l'usinage par tournage-arasage des extrémités des deux vilebrequins 200 et plus particulièrement de leur plateau 230 et de leur queue 240. Ce disque porte-outils 130, également monté mobile (flèche X) le long de l'axe de transfert (flèche A), est animé d'un mouvement alternatif de translation (flèche Y') le long d'un axe perpendiculaire à l'axe de transfert (flèche A) pour évoluer d'une extrémité à l'autre du vilebrequin à des fins d'usinage du plateau 230 et de la queue 240.

Le dessin de la figure 7 a pour objet d'illustrer par un schéma synoptique, la cinématique du poste d'usinage P"1 et des deux stations de travail S"1 et S"2 d'une machine M" assurant l'usinage par tournage-arasage du plateau 230 et de la queue 240 d'un vilebrequin 200. Le disque porte-outils 130 représenté en traits pleins usine par tournage-arasage le plateau 240 du vilebrequin 200, sur sa face et son diamètre, maintenu à ses extrémités dans les poupées de la station de travail S"1. Ensuite, lorsque cet usinage est terminé, le poste d'usinage P"1 se déplace (flèches X) vers la station de travail opposée S"2 tout en dirigeant (flèches Y') le disque porte-outils 130 vers l'autre extrémité du vilebrequin 200, où il est représenté en traits mixtes. Le vilebrequin 200 installé dans la station de travail S"2 est alors usiné par tournage-arasage au niveau de son palier extrême et de la queue 240.

Le vilebrequin 200 est également dans le cas présent considéré comme le même en un instant donné pour mieux mettre en évidence les cycles d'usinage, et les cycles de manutention des vilebrequins sont adaptés de telle manière que chaque vilebrequin 200 soit usiné dans l'ensemble des stations S1, S2, S'1, S'2, S"1, S"2 d'une chaîne d'usinage C qui intégrera en série dans le sens du transfert (flèche A), les trois machines-outils M, M' et M" aptes à usiner la première les quatre paliers 210a, 210b, 210c, 210d du vilebrequin 200, la deuxième les quatre manetons 220a, 220b, 220c, 220d et la troisième les extrémités, à savoir la face et le diamètre du plateau 230 et la queue 240. Le portique 300 comportera alors trois chariots l'un pour la machine M, l'autre pour la machine M' et le troisième pour la machine M", pour assurer chacun le cycle de manutention des vilebrequins 200 entre les trois machines-outils M, M'et M". Le pas "p" entre les organes des trois machines-outils M, M' et M" sera donc identique.

Dans la présente description, le fonctionnement des postes d'usinage, des stations et postes de travail, des portiques a été montré dans sa forme la plus élémentaire, en faisant volontairement abstraction des différents éléments nécessaires à leur mise en oeuvre qui ne relève que de la compétence courante d'un homme de métier spécialisé dans les techniques employées.

On comprend que les machines-outils M, M'et M" et la chaîne d'usinage C les intégrant, qui viennent d'être ci-dessus décrites et représentées, l'ont été en vue d'une divulgation plutôt que d'une limitation. Bien entendu, divers aménagements, modifications et améliorations pourront être apportés aux exemples ci-dessus, sans pour autant sortir du cadre de l'invention pris dans ses aspects et dans son esprit les plus larges.

Afin de permettre une meilleure compréhension des dessins, une liste des références avec leurs légendes est ci-après énumérée.
- M: Machine-outil pour l'usinage de paliers
- M': Machine-outil pour l'usinage de manetons
- M": Machine-outil pour l'usinage des plateau et queue
- C: Chaîne d'usinage
- P1,P'1, P"1: Postes d'usinage
- S1,S2,S'1,S'2,S"1,S"2: Stations de travail
- P2,P3,P4,P5,P6: Postes de travail externes
- 110,110',120,120',130: Disques porte-outils
- 200: Vilebrequin
210a,210b Paliers extrêmes
210c,210d Paliers centraux
220a,220b Manetons extrêmes
220c,220d Manetons centraux
230 Plateau
240 Queue
- 300: Portique de transfert
310,310' Chariots
311,311',312,312' Pinces de préhension
313,313' Magasins porte-outils
- "p": Pas
- Flèche A: Axe de transfert
- Flèches B,B': Points de bridage des vilebrequins 200
- Flèche X: Mouvement de translation du poste d'usinage parallèle à l'axe de transfert
- Flèche Y: Mouvement de translation des disques porte-outils 110, 110', 120, 120' du poste d'usinage P1 ou P'1, normal à l'axe de transfert
- Flèche Y': Mouvement de translation du disque porte-outils 130 du poste d'usinage P"1, normal à l'axe de transfert

## Revendications

1. Machine-outil pour l'usinage de vilebrequins (200) du type de celle comprenant agencés sur un bâti le long de l'axe de transfert (flèche A) d'une chaîne d'usinage (C) et dans un même plan horizontal :
- un poste d'usinage (P1, P'1, P"1) équipé d'au moins un disque porte-outils (110, 110', 120, 120', 130) assurant l'usinage des vilebrequins (200),
- et deux stations de travail (S1, S'1, S"1, S2, S'2, S"2), assurant l'entraînement en rotation de deux vilebrequins (200), **CARACTERISEE PAR LE FAIT QUE** les deux stations de travail (S1, S'1, S"1, S2, S'2, S"2) sont disposées parallèlement en amont et en aval du poste d'usinage (P1, P'1, P"1), de telle sorte que le disque porte-outils (110, 110', 120, 120', 130) de ce dernier monté mobile (flèche X) le long de l'axe de transfert (flèche A) puisse évoluer selon un mouvement de va-et-vient d'une station de travail (S1, S'1, S"1 ou S2, S'2, S"2) à l'autre (S2, S'2, S"2 ou S1, S'1, S"1) et assurer l'usinage d'un vilebrequin (200) sur une station de travail (S1, S'1, S"1 ou S2, S'2, S"2) pendant les opérations auxiliaires nécessaires à l'installation d'un nouveau vilebrequin (200) sur l'autre station de travail (S2, S'2, S"2, S1, S'1, S"1), et vice-versa.

2. Machine-outil selon la revendication 1, destinée à l'usinage de vilebrequins (200) pour moteurs quatre cylindres en ligne, **CARACTERISEE PAR LE FAIT QUE** le susdit poste d'usinage (P1, P'1) est équipé de deux disques porte-outils (110, 110', 120, 120') mobiles (flèche X) le long de l'axe de transfert (flèche A) d'une part, pour évoluer d'une station de travail (S1, S'1 ou S2, S'2) à l'autre station (S2, S'2, S1, S'1), et le long d'un axe perpendiculaire au premier (flèche Y) d'autre part, pour se rapprocher et/ou s'éloigner l'un de l'autre afin d'assurer l'usinage de deux portions différentes (210a, 210a', 220a, 220a', 210b, 210b', 220b, 220b' et 210c, 210c', 220c, 220c', 210d, 210d', 220d, 220d') du vilebrequin (200) d'une station de travail (S1, S'1 ou S2, S'2) à l'autre (S2, S'2, S1, S'1).

3. Machine-outil selon la revendication 1, destinée à l'usinage de vilebrequins (200) pour moteurs quatre cylindres en ligne, **CARACTERISEE PAR LE FAIT QUE** le susdit poste d'usinage (P"1) est équipé d'un disque porte-outils (130) mobile (flèche X) le long de l'axe de transfert (flèche A) d'une part, pour évoluer d'une station de travail (S"1 ou S"2) à l'autre station (S"2, S"1), et le long d'un axe perpendiculaire au premier (flèche Y') d'autre part, pour se déplacer d'une extrémité à l'autre du vilebrequin (200) afin d'assurer l'usinage des extrémités (230 et 240) de ce dernier .

4. Machine-outil selon les revendications 1, 2 et 3, destinée à être intégrée dans une chaîne d'usinage (C) comportant un portique (300) qui assure le transfert des vilebrequins (200) d'une station de travail (S1, S'1, S"1 ou S2, S'2, S"2) à l'autre (S2, S'2, S"2 ou S1, S'1, S"1), **CARACTERISEE PAR LE FAIT QUE** le susdit portique (300) comporte un chariot (310, 310') sur lequel sont installées deux pinces de préhension (311, 311', 312, 312') des vilebrequins (200) ayant un pas "p" égal au pas "p" entre les deux stations de travail (S1, S'1, S"1, S2, S'2, S"2) de la machine-outil (M, M' ou M").

5. Machine-outil selon les revendications 1, 2 , 3 et 4 prises ensemble, **CARACTERISEE PAR LE FAIT QUE** le susdit chariot (310, 310') du portique (300) comporte un magasin porte-outils (313, 313') disposé entre les deux pinces de préhension (311, 311', 312, 312') et destiné à assurer la dépose et/ou la pose par le haut des outils sur le poste d'usinage (P1, P'1, P"1).

6. Procédé de travail d'une machine-outil (M, M', M") pour le tournage-arasage de vilebrequins (200) pour moteurs à quatre cylindres en ligne et réalisée selon les revendications 1, 2, 4 et 5 prises ensemble, la machine étant du type de celle comprenant agencés sur un bâti le long de l'axe de transfert (flèche A) d'une chaîne d'usinage (C) et dans un même plan horizontal :
- un poste d'usinage (P1, P'1, P"1) équipé d'au moins un disque porte-outils (110, 110', 120, 120', 130) assurant l'usinage des vilebrequins (200),
- et deux stations de travail (S1, S'1, S"1, S2, S'2, S"2), assurant l'entraînement en rotation de deux vilebrequins (200),
les deux stations de travail (S1, S'1, S"1, S2, S'2, S"2) étant disposées parallèlement en amont et en aval du poste d'usinage (P1, P'1, P"1), de telle sorte que le disque porte-outils (110, 110', 120, 120', 130) de ce dernier monté mobile (flèche X) le long de l'axe de transfert (flèche A) puisse évoluer selon un mouvement de va-et-vient d'une station de travail (S1, S'1, S"1 ou S2, S'2, S"2) à l'autre (S2, S'2, S"2 ou S1, S'1, S"1) et assurer l'usinage d'un vilebrequin (200) sur une station de travail (S1, S'1, S"1 ou S2, S'2, S"2) pendant les opérations auxiliaires nécessaires à l'installation d'un nouveau vilebrequin (200) sur l'autre station de travail (S2, S'2, S"2, S1, S'1, S"1), et vice-versa." , **CARACTERISE EN CE QU'**il consiste à usiner sur une station de travail (S1, S'1) d'une machine-outil (M, M') les paliers (210a, 210b) ou manetons (220a, 220b) extrêmes d'un vilebrequin (200) et à rapprocher (flèche Y) les deux disques porte-outils (110, 110', 120, 120') l'un de l'autre sur l'autre station de travail (S2, S'2) pour usiner les paliers ou manetons centraux.

7. Procédé de travail selon la revendication 6, **CARACTERISE EN CE QU'**il consiste à usiner sur la première station de travail (S1, S'1) les paliers (210a, 210b) ou manetons (220a, 220b) extrêmes et sur la deuxième station de travail (S2, S'2) les paliers (210c, 210d) ou manetons (220c, 220d) centraux de telle sorte que les vilebrequins (200) puissent être maintenus sur la deuxième station de travail (S2, S'2) au plus près des paliers centraux (210c, 210d) ou manetons centraux (220c, 220d) à usiner.

8. Procédé de travail selon la revendication 7, **CARACTERISE EN CE QU'**il consiste à maintenir les vilebrequins (200) sur la deuxième station de travail (S2, S'2) sur les paliers ou manetons du vilebrequin (200) qui ont déjà été usinés sur une station de travail.

9. Procédé de travail d'une machine-outil (M") pour le tournage-arasage de vilebrequins (200) pour moteurs à quatre cylindres en ligne et réalisée selon les revendications 1, 3, 4 et 5 prises ensemble, **CARACTERISE EN CE QU'**il consiste à usiner sur une station de travail (S"1, S"2) d'une machine-outil (M") le plateau (230) ou queue (240) formant les extrémités d'un vilebrequin (200) et à déplacer (flèche Y') le disque porte-outils (130) d'une extrémité à l'autre du vilebrequin (200) sur l'autre station de travail (S"2, S"1) pour usiner la queue (240) ou le plateau (230) formant l'autre extrémité.

10. Procédé de travail selon la revendication 9, **CARACTERISE EN CE QU'**il consiste à usiner sur la première station de travail (S"1) leplateau extrême (230) et sur la deuxième station de travail (S"2) la queue (240) pour une meilleure tenue des vilebrequins (200) dans les stations de travail ( S"1, S"2).

11. Procédé de travail selon l'une quelconque des revendications 5 à 10, **CARACTERISE EN CE QU'**il consiste à déplacer le chariot (310, 310') sur le portique (300) avec un pas "p" identique à celui de la paire de pinces de préhension (311, 311', 312, 312') et des stations de travail (S1, S'1, S"1, S2, S'2, S"2), de telle sorte que chaque vilebrequin (200) puisse être usiné dans chaque station de travail (SI, S'1, S"1, S2, S'2, S"2) et dans chacune des trois machines-outils (M, M', M") pour l'usinage des paliers (210a, 210b, 210c, 210d) pour la première machine-outil (M), des manetons (220a, 200b, 220c, 220d) pour la deuxième machine-outil (M'), et du plateau (230) et de la queue (240) pour la troisième machine-outil (M").

12. Chaîne d'usinage (C) pour le tournage-arasage des vilebrequins pour moteurs à quatre cylindres en ligne et intégrant des machines-outils ( M, M', M") selon les revendications 1 à 5 prises ensemble et appliquant les procédés de travail selon les revendications 6 à 11 du type de celle comportant un portique (300), **CARACTERISEE PAR LE FAIT QU'**elle comprend, disposées au-dessous dudit portique (300) dans le sens de l'axe de transfert (flèche A), au moins trois machines-outils destinées la première (M) à l'usinage des paliers (210a, 210b, 210c, 210d), la deuxième (M') l'usinage des manetons (220a, 200b, 220c, 220d) et la troisième (M") l'usinage des plateau (230) et queue (240)

13. Chaîne d'usinage selon la revendication 12, **CARACTERISEE PAR LE FAIT QUE** le susdit portique (300) sert de guide à trois chariots (310, 310') qui, se déplaçant avec le même pas "p" et équipés chacun de deux pinces de préhension (311, 311', 312, 312') et d'un magasin porte-outils (313, 313'), assurent chacun pour une des machines-outils (M, M', M"), les cycles de manutention des vilebrequins (200) entre les stations de travail (S1, S'1, S"1, S2, S'2, S"2) et des outils sur les postes d'usinage (P1, P'1, P"1) en adéquation avec les cycles d'usinage des postes d'usinage (P1, P'1) et les cycles des opérations auxiliaires de débridage, de déchargement, de chargement, de bridage et d'indexage des vilebrequins (200) sur les stations de travail (S1, S"1, S"1, S2, S"2, S"2).

## Patentansprüche

1. Werkzeugmaschine zur Bearbeitung von Kurbelwellen (200), die entlang eines sich in Richtung der Transferachse (Pfeil A) erstreckenden Gerüsts einer Bearbeitungsstraße (C) und in derselben horizontalen Ebene aufweist:
- eine Bearbeitungsstation (P1, P'1, P"1), die mit wenigstens einer werkzeugtragenden Scheibe (110, 110', 120, 120', 130) versehen ist, welche die Bearbeitung der Kurbelwellen (200) gewährleistet,
- und zwei Arbeitsstationen (S1, S'1, S"1, S2, S'2, S"2), die den Drehantrieb zweier Kurbelwellen (200) gewährleisten, dadurch gekennzeichnet, dass die beiden Arbeitsstationen (S1, S'1, S"1, S2, S'2, S"2) parallel zueinander vor und hinter der Bearbeitungsstation ((P1, P'1, P"1) derart angeordnet sind, dass die werkzeugtragenden Scheibe der letzteren (110, 110', 120, 120', 130), die beweglich (Pfeil X) entlang der Transferachse (Pfeil A) angeordnet ist, eine Hin- und Herbewegung von einer Arbeitsstation (S1, S'1, S"1, oder S2, S'2, S"2) zur anderen (S2, S'2, S"2 oder S1, S'1, S"1) ausführen können und dabei die Bearbeitung einer Kurbelwelle (200) in einer Arbeitsstation (S1, S'1, S"1 oder S2, S'2, S"2) gewährleistet, während der zusätzlichen Bedienschritte, die zum Einsetzen einer neuen Kurbelwelle (200) in die andere Arbeitsstation (S2, S'2, S"2, S1, S'1, S"1) erforderlich sind und umgekehrt.

2. Werkzeugmaschine nach Anspruch 1 zur Bearbeitung von Kurbelwellen (200) für Vierzylinder-Reihenmotoren, dadurch gekennzeichnet, dass die Bearbeitungsstation (P1, P'1) mit zwei werkzeugtragenden Scheiben (110, 110', 120, 120') versehen ist, die einerseits beweglich (Pfeil X) entlang der Transferachse (Pfeil A) sind, um sich von einer Arbeitsstation (S1, S'1 oder S2, S'2) zur anderen Station (S2, S'2, S1, S'1) zu bewegen und andererseits entlang einer zur ersten Achse senkrechten Achse (Pfeil Y) um sich einer von ihnen anzunähern und/oder zu entfernen, um dergestalt die Bearbeitung zweier verschiedener Abschnitte (210a, 210a', 220a, 220a', 210b, 210b', 220b, 220b' und 210c, 210c', 220c, 220c', 210d, 210d', 220d, 220d') der Kurbelwelle (200) in einer Arbeitsstation (S1, S'1 oder S2, S'2) oder der anderen (S2, S'2, S1, S'1) zu gewährleisten.

3. Werkzeugmaschine nach Anspruch 1 zur Bearbeitung von Kurbelwellen (200) für Vierzylinder-Reihenmotoren, dadurch gekennzeichnet, dass die Bearbeitungsstation (P"1) mit einer werkzeugtragenden Scheibe (130) versehen ist, die einerseits beweglich (Pfeil X) entlang der Transferachse (Pfeil A) zwischen einer Arbeitsstation (S"1 oder S"2) und einer anderen Station (S"2, S"1) ist und andererseits entlang einer Achse senkrecht zur ersten (Pfeil Y) um sich von einem Ende zum anderen der Kurbelwelle (200) zu bewegen und dadurch die Bearbeitung der Enden (230 und 240) der letzteren zu gewährleisten.

4. Werkzeugmaschine nach Ansprüchen 1, 2 und 3 zur Integration in eine Bearbeitungsstraße (C), die einen Rahmen (300) aufweist zum Transfer der Kurbelwellen (200) von einer Arbeitsstation (S1, S'1, S"1 oder S2, S'2, S"2) zur anderen (S2, S'2, S"2 oder S1, S'1, S"1), dadurch gekennzeichnet, dass der Rahmen (300) einen Wagen (310, 310') aufweist, an dem zwei Aufnahmeklammern (311, 311', 312, 312') für die Kurbelwellen (200) angeordnet sind, deren Vorschub "p" gleich dem Vorschub "p" zwischen den beiden Arbeitsstationen (S1, S'1, S"1, S2, S'2, S"2) der Werkzeugmaschine (M, M' oder M") ist.

5. Werkzeugmaschine nach Ansprüchen 1, 2, 3 und 4 in ihrer Gesamtheit, dadurch gekennzeichnet, dass der Wagen (310, 310') des Rahmens (300) ein Werkzeugträgermagazin (313, 313') aufweist, das zwischen den beiden Halteklammern (311, 311', 312, 312') angeordnet ist und zur Abgabe und/oder zur Aufnahme von oben von Werkzeugen für die Bearbeitungsstation (P1, P'1, P"1) dient.

6. Arbeitsverfahren für eine Werkzeugmaschine (M, M', M") zur Drehen und Schneiden von Kurbelwellen (200) für Vierzylinder-Reihenmotoren mit Hilfe der in den Ansprüchen 1, 2, 4 und 5 in ihrer Gesamtheit beschriebenen Vorrichtung, wobei die Maschine entlang eines sich in Richtung der Transferachse (Pfeil A) erstreckenden Gerüsts einer Bearbeitungsstraße (C) und in derselben horizontalen Ebene aufweist:
- eine Bearbeitungsstation (P1, P'1, P"1), die mit wenigstens einer werkzeugtragenden Scheibe (110, 110', 120, 120', 130) versehen ist, welche die Bearbeitung der Kurbelwellen (200) gewährleistet,
- und zwei Arbeitsstationen (S1, S'1, S"1, S2, S'2, S"2), die den Drehantrieb zweier Kurbelwellen (200) gewährleisten,
dadurch gekennzeichnet, wobei die beiden Arbeitsstationen (S1, S'1, S"1, S2, S'2, S"2) parallel zueinander vor und hinter der Bearbeitungsstation ((P1, P'1, P"1) derart angeordnet sind, dass die werkzeugtragende Scheibe (110, 110', 120, 120', 130) der letzteren, die beweglich (Pfeil X) entlang der Transferachse (Pfeil A) angeordnet sind, eine Hin- und Herbewegung von einer Arbeitsstation (S1, S'1, S"1, oder S2, S'2, S"2) zur anderen (S2, S'2, S"2 oder S1, S'1, S"1) ausführen kann und dabei die Bearbeitung einer Kurbelwelle (200) in einer Arbeitsstation (S1, S'1, S"1 oder (S2, S'2, S"2) gewährleistet während der zusätzlichen Bedienschritte, die zum Einsetzen einer neuen Kurbelwelle (200) in die andere Arbeitsstation (S2, S'2, S"2, S1, S'1, S"1) erforderlich sind und umgekehrt,
dadurch gekennzeichnet, dass es darin besteht, in einer Arbeitstation (S1, S'1) einer Werkzeugmaschine (M, M') die Lager (210a, 210b) oder die Endzapfen (220a, 220b) einer Kurbelwelle (200) zu bearbeiten und die beiden werkzeugtragenden Scheiben (110, 110', 120, 120') in der anderen Arbeitstation (S2, S'2) einander anzunähern, um die Lager oder die Mittenzapfen zu bearbeiten.

7. Arbeitsverfahren nach Anspruch 6, dadurch gekennzeichnet, dass es darin besteht, in der ersten Arbeitsstation (S1, S'1) die Lager (210a, 210b) oder die Endzapfen (220a, 220b) zu bearbeiten und in der zweiten Arbeitsstation (S2, S'2) die Mittenlager (210c, 210d) oder die Mittenzapfen (220c, 220d) derart zu bearbeiten, dass die Kurbelwellen (200) in der zweiten Arbeitsstation (S2, S'2) so nahe wie möglich an den zu bearbeitenden Mittenlagern (210c, 210d) oder Mittenzapfen (220c, 220d) gehalten werden.

8. Arbeitsverfahren nach Anspruch 7, dadurch gekennzeichnet, dass es darin besteht, die Kurbelwellen (200) in der zweiten Arbeitsstation (S2, S'2) an den bereits in einer Arbeitsstation bearbeiteten Lagern oder Zapfen der Kurbelwelle (200) zu halten.

9. Arbeitsverfahren für eine Werkzeugmaschine (M") zum Drehen und Schneiden von Kurbelwellen (200) für Vierzylinder-Reihenmotoren nach den Ansprüchen 1, 3, 4 und 5 in ihrer Gesamtheit, dadurch gekennzeichnet, dass es darin besteht, in einer Arbeitsstation (S"1, S"2) einer Werkzeugmaschine (M") den Flansch (230) oder den die Enden der Kurbelwelle (200) bildenden Endabschnitt (240) zu bearbeiten und die werkzeugtragende Scheibe (130) von einem Ende zum anderen Ende der Kurbelwelle (200) in der anderen Arbeitsstation (S"2, S"1) zu verbringen, um den Endabschnitt (240) oder den das andere Ende bildenden Flansch (230) zu bearbeiten.

10. Arbeitsverfahren nach Anspruch 9, dadurch gekennzeichnet, dass es darin besteht, in der ersten Arbeitsstation (S"1) den Flansch (230) und in der zweiten Arbeitsstation (S"2) den Abschnitt (240) zu bearbeiten im Hinblick auf eine bessere Aufnahme der Kurbelwellen (200) in den Arbeitsstationen (S"1, S"2).

11. Arbeitsverfahren nach einem der Ansprüche 5 bis 10, dadurch gekennzeichnet, dass es darin besteht, den Wagen (310, 310') des Rahmens (300) mit einem Vorschub "P" zu verschieben, der identisch zu demjenigen des Paares Halteklammern (311, 311', 312, 312') und der Arbeitsstationen (S1, S'1, S"1, S2, S'2, S"2) ist, derart, dass jede Kurbelwelle (200) in jeder Arbeitsstation (S1, S'1, S"1, S2, S'2, S"2) bearbeitet werden kann und in jeder der drei Werkzeugmaschinen (M, M', M") zur Bearbeitung der Lager (210a, 210b, 210c, 210d) in der ersten Werkzeugmaschine (M), der Zapfen (220a, 220b, 220c, 220c) in der zweiten Werkzeugmaschine (M') und des Flansches (230) und des Abschnitts (240) in der dritten Werkzeugmaschine (M").

12. Bearbeitungsstraße (C) zum Drehen und Schneiden von Kurbelwellen für Vierzylinder-Reihenmotoren, in welcher die Werkzeugmaschinen (M, M', M") nach den Ansprüchen 1 bis 5 in ihrer Gesamtheit integriert sind und unter Verwendung der Arbeitsverfahren nach den Ansprüchen 6 bis 11, wobei diese einen Rahmen (300) aufweist,
dadurch gekennzeichnet, dass sie unterhalb des Rahmens (300) in Richtung der Transferachse (Pfeil A) wenigstens drei Werkzeugmaschinen aufweist, wobei die Erste (M) zur Bearbeitung der Lager (210a, 210b, 210c, 210d), die Zweite (M') zur Bearbeitung der Zapfen (220a, 220b, 220c, 220d) und die Dritte (M") zur Bearbeitung des Flansches (230) und des Endabschnitts (240) dient.

13. Bearbeitungsstraße nach Anspruch 12, dadurch gekennzeichnet, dass der Rahmen (300) zur Führung von drei Wagen (310, 310') dient, die sich mit dem gleichen Vorschub "p" verschieben und deren jeder mit zwei Halteklammern (311, 311', 312, 312') versehen ist, sowie mit einem Werkzeugträgermagazin (313, 313'), deren jeder für eine der Werkzeugmaschinen (M, M', M") die Bearbeitungszyklen der Kurbelwellen (200) zwischen den Arbeitsstationen (S1, S'1, S"1, S2, S'2, S"2) gewährleistet und mit Werkzeugen für die Bearbeitungsstationen (P1, P'1, P"1) unter Berücksichtigung der Bearbeitungszyklen der Bearbeitungsstationen (P1, P'1) und der zusätzlichen Bearbeitungsschritte zum Freigeben, zum Entladen, zum Beladen, zur Aufnahme und zur Kennzeichnung der Kurbelwellen (200) in den Arbeitsstationen (S1, S'1, S"1, S2, S'2, S"2).

## Claims

1. Machine tool for the machining of crankshafts (200) of the type which includes the stations listed below, arranged on a frame along the transfer axis (arrow A) of a machining line (C) and in the same horizontal plane:
one machining station (P1, P'1, P"1) equipped with at least one tool holder disc (110, 110', 120, 120', 130) ensuring the machining of the crankshafts (200),
and two workstations (S1, S'1, S"1, S2, S'2, S"2) which drive two crankshafts (200),
CHARACTERIZED IN THAT both workstations (S1, S'1, S"1, S2, S'2, S"2) are laid out in parallel upstream and downstream from the machining station (P1, P'1, P"1), so that the tool holder disc (110, 110', 120, 120', 130) of the latter, which is mobile (arrow X) along the transfer axis (arrow A) can move back and forth from one workstation (S1, S'1, S"1 or S2, S'2, S"2) to the other (S2, S'2, S"2 or S1, S'1, S"1) and ensures the machining of a crankshaft (200) on a workstation (S1, S'1, S"1 or S2, S'2, S"2) while the auxiliary operations necessary to the installation of a new crankshaft (200) on the other workstation (S2, S'2, S"2, S1, S'1, S"1) are carried out, and vice versa.

2. Machine tool according to claim 1, intended for the machining of crankshafts (200) for engines with four in-line cylinders, CHARACTERIZED IN THAT the aforesaid machining station (P1, P'1) is equipped with two tool holder discs (110, 110 ', 120, 120') which are mobile (arrow X) along the transfer axis (arrow A) on the one hand, in order to move from one workstation (S1, S'1 or S2, S'2) to the other (S2, S'2, S1, S'1), and on the other hand along an axis perpendicular to the former (arrow Y) on the other hand, in order to move closer to or further away from each other and ensure the machining of two different parts (210a, 210a', 220a, 220a', 210b, 210b', 220b, 220b' and 210c, 210c', 220c, 220c', 210d, 210d', 220d, 220d') of crankshafts (200) from one workstation (S1, S'1 or S2, S'2) to the other (S2, S'2, S1, S'1).

3. Machine tool according to claim 1, intended for the machining of crankshafts (200) for engines with four in-line cylinders, CHARACTERIZED IN THAT the aforesaid machining station (P"1) is equipped with a tool holder disc (130) which is mobile (arrow X) along the transfer axis (arrow A) to move from one workstation (S"1 or S"2) to the other (S"2, S"1), and additionally along an axis perpendicular to the former (arrow Y'), to move from one end to the other of the crankshaft (200) in order to complete the machining of both ends (230 and 240).

4. Machine tool according to claims 1, 2 and 3, intended to be integrated in a machining line (C) which includes a portal (300) to ensure the transfer of crankshafts (200) from one workstation (S1, S'1, S"1 or S2, S'2, S"2) to the other (S2, S'2, S"2 or S1, S'1, S"1), CHARACTERIZED IN THAT the aforesaid portal (300) includes a carriage (310, 310') fitted with two gripping clamps (311, 311', 312, 312') for crankshafts (200) and whose spacing "p" is equal to spacing "p" between the two workstations (S1, S'1, S"1, S2, S'2, S"2) of the machine tool (M, M' or M").

5. Machine tool according to claims 1, 2, 3 and 4 taken together, CHARACTERIZED IN THAT the aforesaid carriage (310, 310') on the portal (300) includes a tool magazine (313, 313') laid out between the two gripping clamps (311, 311', 312, 312') and intended to ensure the downward fixing and detaching of the tools on the machining station (P1, P'1, P"1).

6. Machine tool (M, M', M") work process for the turning and shaving of crankshafts (200) for engines with four in-line cylinders and carried out according to claims 1, 2, 4 and 5 taken together, the machine being of the type which includes the stations listed below, arranged on a frame along the transfer axis (arrow A) of a machining line (c) and in the same horizontal plane:
- one machining station (P1, P'1, P"1) equipped with at least one tool holder disc (110, 110', 120, 120', 130) which makes possible the machining of crankshafts (200),
- and two workstations (S1, S'1, S"1, S2, S'2, S"2) which drive two crankshafts (200), both workstations (S1, S'1, S"1, S2, S'2, S"2) being laid out in parallel upstream and downstream from the machining station (P1, P'1, P"1), so that the tool holder disc (110, 110 ', 120, 120', 130) of the latter, which is mobile (arrow X) along the transfer axis (arrow A) can move back and forth from one workstation (S1, S'1, S"1 or S2, S'2, S"2) to the other (S2, S'2, S"2 or S1, S'1, S"1) and ensure the machining of a crankshaft (200) on a workstation (S1, S'1, S"1 or S2, S'2, S"2) while the auxiliary operations necessary to the installation of a new crankshaft (200) on the other workstation (S2, S'2, S"2, S1, S'1, S"1) are carried out, and vice versa, CHARACTERIZED IN THAT it consists in machining the crankshafts' outer bearings (210a, 210b) or crankpins (220a, 220b) on a machine tool (M, M') workstation (S1, S'1) and in bringing the two tool holder discs (110, 110', 120, 120') closer (arrow Y) on the other workstation (S2, S'2) in order to machine the central bearings or crankpins.

7. Work process according to claim 6, CHARACTERIZED IN THAT it consists in machining the outer bearings (210a, 210b) or crankpins (220a, 220b) on the first workstation (S1, S'1) and the central bearings (210c, 210d) or crankpins (220c, 220d) on the second workstation (S2, S'2) so that the crankshafts (200) can be maintained on the second workstation (S2, S'2) closer to the central bearings (210c, 210d) or crankpins (220c, 220d) to be machined.

8. Work process according to claim 7, CHARACTERIZED IN THAT it consists in maintaining the crankshafts (200) on the second workstation (S2, S'2) on the crankshaft (200) bearings or crankpins which have already been machined on a workstation.

9. Machine tool (M") work process for the turning and shaving of crankshafts (200) for engines with four in-line cylinders and carried out according to claims 1, 3, 4 and 5 taken together, CHARACTERIZED IN THAT it consists in machining the plate (230) or the tail (240) which make up the ends of a crankshaft (200) on a machine tool (M") workstation (S"1, S"2) and in moving (arrow Y') the tool holder disc(130) from one end to the other of the crankshaft (200) onto the other workstation (S"2, S"1) in order to machine the tail (240) or the plate (230) which make up the other end.

10. Work process according to claim 9, CHARACTERIZED IN THAT it consists in machining the outer plate (230) on the first workstation (S"1) and the tail (240) on the second workstation (S"2) for a better running of crankshafts (200) on the workstations (S"1, S"2).

11. Work process according to any of claims 5 to 10, CHARACTERIZED IN THAT it consists in moving the carriage (310, 310') on the portal (300) by a spacing "p" identical to that of the pair of gripping clamps (311, 311', 312, 312') and to that of the workstations (S1, S'1, S"1, S2, S'2, S"2), so that each crankshaft (200) can be machined on each workstation (S1, S'1, S"1, S2, S'2, S"2) and on each of the three machine tools (M, M', M"), the machining of bearings (210a, 210b, 210c, 210d) being carried out on the first machine tool (M), that of crankpins (220a, 200b, 220c, 220d) on the second machine tool (M'), and that of the plate (230) and tail (240) on the third machine tool (M").

12. Machining line (C) for the turning and shaving of crankshafts (200) for engines with four in-line cylinders supporting machine tools (M, M', M") according to claims 1 to 5 taken together and implementing work processes according to claims 6 to 11 of the type including a portal (300), CHARACTERIZED IN THAT it includes at least three machine tools which are laid out below the aforesaid portal (300) along the transfer axis (arrow A), the first one (M) being for the machining of bearings (210a, 210b, 210c, 210d), the second (M') for the machining of crankpins (220a, 200b, 220c, 220d) and the third (M") for the machining of the plate (230) and tail (240).

13. Machining line according to claim 12, CHARACTERIZED IN THAT the aforesaid portal (300) is used to guide three carriages (310, 310'), each of them moving by a spacing "p" and equipped with two gripping clamps (311, 311', 312, 312') and one tool magazine (313, 313'), which respectively carry out for each machine tool (M, M', M") handling cycles for crankshafts (200) between workstations (S1, S'1, S"1, S2, S'2, S"2) and for tools on machining stations (P1, P'1, P"1), in balance with machining cycles of machining stations (P1, P'1) and with cycles including operations of disengagement, unloading, loading, engagement and indexing of crankshafts (200) on the workstations (S1, S'1, S"1, S2, S'2, S"2).
